# EUROPEAN PATENT APPLICATION

(11) **EP 1 289 325 A1**
(43) Date of publication of application: **05.03.2003**
(21) Application number: 01308043.7
(22) Date of filing: 21.09.2001
(51) Int. Cl.: H04Q 7/32

(54) **Mobile communications device**

(30) Priority: 03.09.2001 GB 0121354
(71) Applicant: TELEFONAKTIEBOLAGET LM ERICSSON, 126 25 Stockholm (SE)
(72) Inventor: Sakiria, Sanjay, Horsell. Woking GU21 4LY (GB)
(74) Representative: O'Connell, David Christopher

(57) **Abstract**

A mobile communications device detects that its power is connected. If no SIM card is inserted in the device, a timer is started. After the expiry of a preset time period, then, if no emergency call is in progress and no digits have been dialled, the power supply is disconnected.

Thus, while it remains possible to make an emergency call as normal, as long as the call is made within the preset time period after the device has been powered on, the power will be automatically removed after the preset time period, thereby inhibiting any further transmissions and any further drain of the internal power source.

## Description

### TECHNICAL FIELD OF THE INVENTION

This invention relates to products with inbuilt batteries, which may inadvertently be left powered on. In particular, the invention relates to mobile communication devices such as mobile phones, which could be left powered on with no SIM card inserted. The invention is also applicable to other devices which may inadvertently be left powered on.

### BACKGROUND OF THE INVENTION

A mobile communications device could inadvertently be left powered on, for example, when a mobile phone with a built in battery is manufactured, and is shipped from the factory without a SIM card, but could accidentally be switched on, or could inadvertently be left switched on after testing or other procedures in the factory.

If mobile communication devices under transportation or storage are left powered on with no SIM card inserted, then it may be possible for them to emit transmissions during transportation which could interfere with other communication systems, such as aircraft navigation systems. Such transmissions could in any event drain the internal power source.

### SUMMARY OF THE INVENTION

In order to solve this problem, the device is provided with software or hardware which detects that the power is connected to the product. The software or hardware detects that the SIM card is not inserted in the device. If the SIM card is not inserted, the software or hardware starts a timer. After the expiry of a preset time period, the software or hardware will check to confirm whether the relevant emergency call digits (e.g. 112, 999, 911, etc) or any other digits have been dialled, or if an emergency call is in progress.

If, after the expiry of the preset time period, the relevant emergency call digits or any other digits have not been dialled, and if no emergency call is in progress, then the software or hardware will automatically remove power from the product and power down in the normal manner.

Emergency calls attempted before the expiry of the preset time period shall be set up in the normal manner.

This would ensure that, if the device is powered on without a SIM card inserted, it would be possible to make an emergency call as normal, as long as the call is made within the preset time period after the device has been powered on.

Also, it would ensure that, if the device is powered on without a SIM card inserted, the power will be automatically removed after the preset time period, thereby inhibiting any further transmissions and any further drain of the internal power source.

The invention is generally applicable to portable radio communication equipment or mobile radio terminals, such as mobile telephones, pagers, communicators, electronic organisers, smartphones, personal digital assistants (PDAs), or the like.

### BRIEF DESCRIPTION OF THE DRAWINGS

Figure 1 is a block schematic diagram of a mobile communications device in accordance with an aspect of the invention.

Figure 2 is a flowchart illustrating a process in accordance with another aspect of the invention.

### DETAILED DESCRIPTION OF PREFERRED EMBODIMENTS

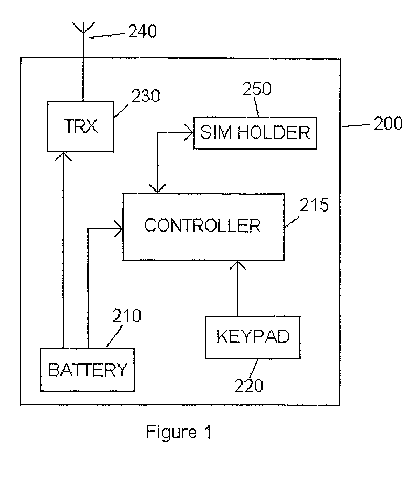

Figure 1 shows a mobile communications device, specifically a mobile phone 200. The phone 200 may be generally conventional, except as described herein, with only those features which are essential for an understanding of the invention being described.

The phone 200 includes a built in battery 210, which provides power for the phone.

Although the invention is described above with reference to a device with a built in battery, it is also applicable to devices with external batteries, provided that they are provided with means for detecting that the power supply is connected.

The phone includes a controller 215, which receives user inputs from a keypad 220, for example, and also includes radio frequency transceiver circuitry 230, which receives and transmits signals via an antenna 240. The controller 215 is also connected to any SIM card, which may be present in a SIM card holder 250. The controller is also able to start a timer, and judge the expiry of a specified time period from the start of the timer.

In one preferred embodiment of the invention, the control process according to the invention is carried out in software within the controller 215. However, at least some aspects of the process could be carried out in hardware, under the general control of the controller 215.

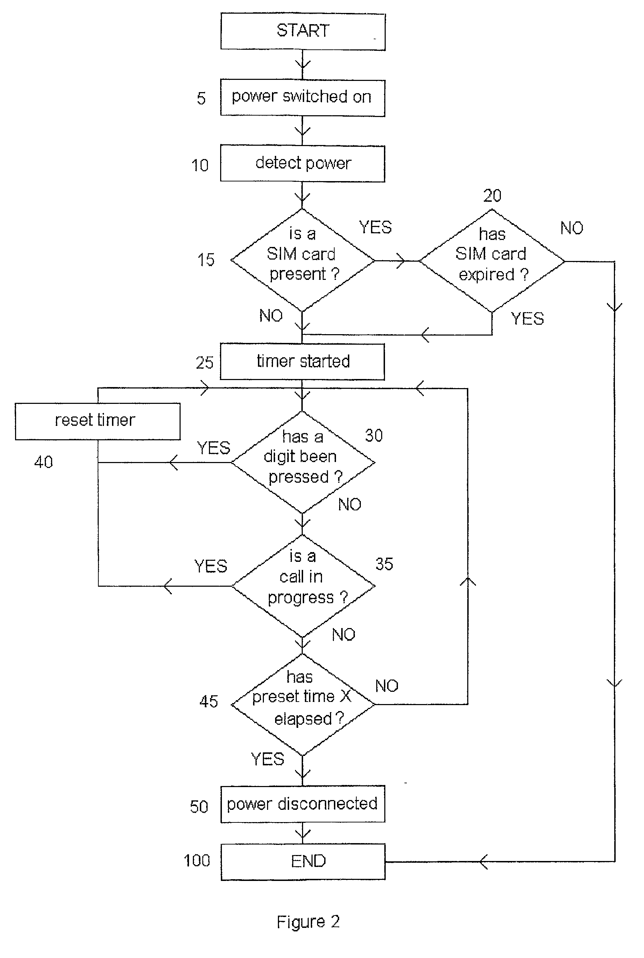

Figure 2 is a flowchart illustrating a control process in accordance with the present invention. In step 5, the power to the mobile communications device is switched on. The process proceeds to step 10 where the power is detected. When power is detected, then, at step 15, a check is carried out to determine the presence of a SIM card. If a SIM card is found to be present then the process passes to step 20, where the validity of the SIM card is checked. If the SIM card has not expired, then the process goes to step 100 and ends.

In the event that the test at step 15 determines there is no SIM card present, or the test at step 20 determines that any SIM card which is present has expired, then the process moves to step 25 where a timer is started.

At step 30, it is tested whether any key on the keypad of the device has been pressed. If a digit has been dialled, then the process moves to step 40 where the timer is restarted. If no digits have been dialled, then the process moves to step 35 where the status of a call is checked.

In the event that a call is found to be in progress, the process moves to step 40 and the timer is restarted. If it is found that no calls are in progress then the process moves to step 45 where the elapsed time is checked. If a preset time X has not yet elapsed, then the process returns to step 30. If a preset time X has elapsed, then the process moves to step 50 and the power is disconnected from the mobile communications device. The process then ends at step 100.

Thus, if the device is inadvertently left switched on while no SIM card is inserted, the power is automatically switched off. This occurs after a time period X, which is preferably set to be several minutes, preferably 10 minutes or more. In one preferred embodiment, the time period is 30 minutes.

After the power is automatically switched off, it remains possible to repower the device in the normal way.

The invention is described herein with reference to a control procedure in which the power is disconnected in the event that the power is switched on when no SIM card is present. The invention also relates to a control procedure in which the power is switched off (after the preset time period) if the SIM card is removed while the power source is connected.

These procedures both have the advantage that a device with an internal battery can not be left on without a SIM card inserted. This prevents transmissions that may interfere with other systems, or battery drain.

The problem solved by the present invention, namely that the mobile communication device could inadvertently be left powered on and could then emit transmissions which could interfere with other communication systems or could drain the power source, can also arise in other situations. If it can be determined in other ways that the device has been left powered on inadvertently, then the device can also automatically be powered down in such situations.

## Claims

1. A method for controlling a mobile communications device having a power source, wherein, when said mobile communications device is connected to the power source:
a SIM card status is detected,
in the event that the SIM card status meets a first predetermined set of criteria, a timer is started,
after expiry of a predetermined time period from the start of said timer, and in the event that a call status of the device meets a second predetermined set of criteria, then said mobile communications device is disconnected from said power source.

2. The method according to claim 1, wherein the SIM card status meets the first predetermined set of criteria if no SIM card is present.

3. The method according to claim 1 or 2, wherein the SIM card status meets the first predetermined set of criteria if the SIM card has expired.

4. The method according to claim 1, wherein the call status meets the second predetermined set of criteria if no call is in progress.

5. The method according to claim 1, wherein the call status meets the second predetermined set of criteria if no digits corresponding to emergency numbers have been dialled.

6. The method according to claim 5, wherein the call status meets the second predetermined set of criteria if no digits have been dialled.

7. The method according to claim 1, wherein the call status meets the second predetermined set of criteria if no digits have been dialled and no call is in progress.

8. The method according to any preceding claim, wherein said timer is reset in the event of a digit being dialled during said predetermined time period.

9. The method according to any preceding claim, wherein said timer is reset in the event of a keypad being used during said predetermined time period.

10. The method according to any preceding claim, wherein said timer is reset in the event of a call being connected during said predetermined time period.

11. The method according to any preceding claim, wherein, when said mobile communications device has been disconnected from said power source, said mobile communications device can be reconnected to said power source in the normal manner.

12. A mobile communications device, comprising:
a power source,
means for detecting a SIM card status,
means for starting a timer, in the event that the SIM card status of the device meets a first predetermined set of criteria,
means for disconnecting said mobile communications device from said power source, in the event that a predetermined time period from the start of the timer expires and the call status of the device meets a second predetermined set of criteria.

13. A mobile communications device according to claim 12, further comprising:
a keypad,
means for detecting use of said keypad, and
means for disconnecting said mobile communications device from said power source, in the event that a predetermined time period from a detected use of the keypad and the call status of the device meets the second predetermined set of criteria.

14. A mobile communications device according to claim 12 or 13, **characterised in that**, when said mobile communications device has been disconnected from said power source, said mobile communications device can be reconnected to said power source in the normal manner.

15. A mobile communications device according to any of the claims 12 to 14, **characterised in that** said power source is built-in.

16. A mobile communications device according to any of the claims 12 to 14, **characterised in that** said power source is removable.
